# EUROPÄISCHE PATENTSCHRIFT

(11) **EP 3 524 836 B1**
(45) Veröffentlichungstag und Bekanntmachung des Hinweises auf die Patenterteilung: **09.12.2020**
(21) Anmeldenummer: 19154022.8
(22) Anmeldetag: 28.01.2019
(51) Int. Cl.: B62D 7/20

(54) **AXIALKUGELZAPFEN**
AXIAL BALL STUD
PIVOT À ROTULE AXIAL

(30) Priorität: 09.02.2018 DE 102018102934
(43) Veröffentlichungstag der Anmeldung: 14.08.2019
(73) Patentinhaber: Mac Panther GmbH, 28199 Bremen (DE)
(72) Erfinder: KLEINE, Michael, 28832 Achim (DE); KLEINE, Werner, 28832 Achim (DE)
(74) Vertreter: Eisenführ Speiser

(56) Entgegenhaltungen:
- EP-A2- 1 418 349
- DE-A1- 19 921 107
- DE-A1-102011 081 935
- DE-U- 1 854 243
- DE-U1-202009 014 886
- FR-A- 1 226 331
- US-A- 2 779 603
- US-A- 2 862 740
- US-A1- 2016 177 998

## Beschreibung

Die Erfindung betrifft einen Axialkugelzapfen zur Verwendung bei Fahrzeuglenkvorrichtungen oder Fahrzeugaufhängungen, aufweisend eine gerade oder gekrümmte Metallstange, vorzugsweise aus Aluminium, einen an einem Ende der Metallstange angeordneten Gewindeabschnitt, und eine am anderen Ende der Metallstange angeordnete Gelenkkugel. Die Erfindung betrifft weiterhin ein Spurstangeninnengelenk für eine Fahrzeuglenkung, mit einem eine Zapfenöffnung aufweisenden Gehäuse, einem eine Gelenkkugel und eine Metallstange aufweisenden Axialkugelzapfen, insbesondere einem Axialkugelzapfen der vorstehend genannten Art, der mit seiner Gelenkkugel bewegbar in dem Gehäuse gelagert ist und sich in einer axialen Richtung durch die Zapfenöffnung hindurch aus diesem heraus erstreckt.

Axialkugelzapfen und Spurstangeninnengelenke für Fahrzeuglenkvorrichtungen bzw. Fahrzeugaufhängungen sind aus dem Stand der Technik bekannt. So zeigen beispielsweise die JPH 10129508A, DE 10 2011 079 500 A1, JPH 042782U, DE 198 43 726 A1, DE 2 404 853 A1, DE 18 54 243 U, DE 199 21 107 A1, EP 1 418 349 A2, DE 102011 081935 A1, FR 1 226 331 A, US 2 779 603 A, US 2 862 740 A, DE 20 2009 014886 U1 und US 2016/177998 A1 derartige Vorrichtungen. DE 10 2011 079 500 A1 offenbart die Merkmale des Oberbegriffs von Anspruch 1.

Aufgabe der vorliegenden Erfindung ist es, Axialkugelzapfen und Spurstangeninnengelenke der vorstehend genannten Art zur Verfügung zu stellen, die gegenüber den bekannten Axialkugelzapfen bzw. Spurstangeninnengelenken verbessert sind. Dies betrifft insbesondere die Kosten, das Gewicht und/oder die Funktion (Lenkwinkel, Wendekreis). Diese Aufgabe wird gelöst durch die Gegenstände der unabhängigen Ansprüche.

Die vorliegende Erfindung umfasst die Erkenntnis, dass Axialkugelzapfen der eingangs genannten Art aufgrund ihrer Verwendung in von hohen Sicherheitsanforderungen geprägten Fahrzeuglenkvorrichtungen, Lenkgetrieben oder Fahrzeugaufhängungen regelmäßig aus vorvergütetem, jedoch gerade noch umformbarem legierten Stahl hergestellt sind. Um eine einwandfreie Funktion des Axialkugelzapfens in den vorgenannten Vorrichtungen sicher zu stellen, muss die Gelenkkugel des Axialkugelzapfens einen möglichst großen Durchmesser aufweisen, während jedoch die Metallstange, die an einem Ende den Gewindeabschnitt und an ihrem anderen Ende die Gelenkkugel trägt, möglichst dünn sein soll, um leicht zu sein und sich bei einem Umfall auch leicht verformen zu können, um so das teure Lenkgetriebe zu schützen. Gleichzeitig muss die Metallstange aber auch immer noch einen Umfang aufweisen, der ausreichend ist, um den vorstehend bereits erwähnten hohen Sicherheitsstandards im Bereich von Fahrzeuglenkvorrichtungen, Lenkgetrieben und Fahrzeugaufhängungen Rechnung tragen zu können.

Die Vorteile der vorliegenden Erfindung liegen somit insbesondere darin, dass aufgrund der zweiteiligen Ausbildung des Axialkugelzapfens, bei dem die Gelenkkugel ein zumindest bis in ihre Mitte, bevorzugt durch ihre Mitte hindurch, verlaufende Längsöffnung aufweist, in welche die Metallstange mit einem Endzapfen hineinragt, wobei Gelenkkugel und Endzapfen in dieser Längsöffnung formschlüssig und/oder kraftschlüssig miteinander verbunden sind, die Gelenkkugel separat von der Metallstange hergestellt werden kann. Der Umfang der Gelenkkugel kann daher ohne Rücksicht auf die Metallstange so groß gewählt werden, wie es den spezifischen Anforderungen im jeweiligen Anwendungsfall entspricht. Es ist somit eine optimale Anpassung des Durchmessers der Gelenkkugel an die jeweils gewünschten Spezifikationen möglich. Diese können erfüllt werden, ohne Rücksicht auf einen Durchmesser der Metallstange. Vielmehr kann die Metallstange so dünn wie nur möglich und vor allen Dingen auch so einfach wie nur möglich zur Verfügung gestellt werden, ohne die Eigenschaften der Gelenkkugel zu beeinträchtigen. Dadurch ist auch das aus dem Stand der Technik notwendige aufwendige Herunterdrehen der aus dem Stand der Technik bekannten Einschnürung zwischen Gelenkkugel und Metallstange, sowie auch das Kugeldrehen mit anschließendem Glattwalzen der Gelenckugel nicht mehr erforderlich, da die Kugel bereits mit ihrem Enddurchmesser montiert werden kann, wodurch insbesondere auch erhebliche Kosten eingespart werden können. Besonders vorteilhaft ist es bei der vorliegenden Erfindung, dass der Endzapfen mit einer gegenüber einem gewindeabschnittsseitig an den Endzapfen angrenzenden Bereich der Metallstange erhöhten Festigkeit zur Verfügung gestellt werden kann. Dadurch wird es Dank der vorliegenden Erfindung erstmals möglich, trotz der Tatsache, dass der Endzapfen einen geringeren Durchmesser als der den Endzapfen mit dem Gewindeabschnitt verbindenden Teil der Metallstange aufweist, härter als dieser Teil der Metallstange bezüglich seiner Festigkeit ausgebildet werden kann, was angesichts der Tatsache, dass der Hals zwischen Gelenkkugel und Metallstange im Allgemeinen den kleinsten Durchmesser des Axialkugelzapfens aufweist, von besonderem Vorteil ist.

Eine bevorzugte Ausführungsform der Erfindung sieht vor, dass der Endzapfen eine bevorzugt um mindestens 150 N/mm² größere Festigkeit aufweist als ein gewindeabschnittsseitig an den Endzapfen angrenzender Bereich der Metallstange.

Eine bevorzugte Ausführungsform der Erfindung sieht vor, dass der Endzapfen eine Festigkeit im Bereich von 1000 bis 1200 N/mm² aufweist.

Eine bevorzugte Ausführungsform der Erfindung sieht vor, dass der Endzapfen eine zumindest annähernd gleiche, bevorzugt eine gleiche Querschnittsfläche, gemessen senkrecht zur Längsachse, aufweist wie ein an den Endzapfen gewindeabschnittsseitig angrenzender Gelenkhals, und weiter bevorzugt auch wie der, bevorzugt an den Gelenkhals gewindeabschnittsseitig angrenzende, Knickbereich.

Eine bevorzugte Ausführungsform der Erfindung sieht vor, dass die Längsöffnung der Gelenkkugel als Durchgangsöffnung ausgebildet ist.

Eine bevorzugte Ausführungsform der Erfindung sieht vor, dass die Längsöffnung der Gelenkkugel und der Endzapfen zylinderförmig mit korrespondierendem Durchmesser ausgebildet sind.

Eine bevorzugte Ausführungsform der Erfindung sieht vor, dass die Längsöffnung der Gelenkkugel ein Innengewinde und der Endzapfen ein Außengewinde aufweist und Gelenkkugel und Endzapfen mittels dieser Gewinde verbunden sind.

Eine bevorzugte Ausführungsform der Erfindung sieht vor, dass die Längsöffnung der Gelenkkugel über ihre Längsachse verteilt von der prismatischen und/oder zylindrischen Grundform abweichende Querschnittsveränderungen, insbesondere Vergrößerungen aufweist, in die korrespondierende Querschnittsveränderungen des Endzapfens formschlüssig eingreifen.

Eine bevorzugte Ausführungsform der Erfindung sieht vor, dass der Endzapfen eine Schraubenkopfform, insbesondere einen Sechskantkopf, aufweist.

Eine bevorzugte Ausführungsform der Erfindung sieht vor, dass die Gelenkkugel und der Endzapfen durch Einpressen, Umspritzen, Umgießen, Schweißen, insbesondere Widerstandsschweißen, Löten und/oder Kleben miteinander verbunden sind.

Eine bevorzugte Ausführungsform der Erfindung sieht vor, dass Endzapfen und Gelenckugel aus unterschiedlichen Materialien bestehen und/oder unterschiedliche Festigkeiten aufweisen.

Eine bevorzugte Ausführungsform der Erfindung sieht vor, dass die Gelenkkugel aus einem Sintermetall, einem Thermoplast und/oder einem Duroplast besteht und vorzugsweise mit einem Metall beschichtet ist.

Eine bevorzugte Ausführungsform der Erfindung sieht vor, dass eine Querschnittsfläche des Knickbereichs, gemessen senkrecht zur Längsachse, optional zumindest abschnittsweise geringer sein kann als ein gewindeabschnittsseitig an den Knickbereich angrenzender Teil der Metallstange. Hierdurch kann erheblich Gewicht eingespart werden.

Eine bevorzugte Ausführungsform der Erfindung sieht vor, dass zwischen dem Knickbereich und dem Gewindeabschnitt, vorzugsweise als Sechskant ausgebildete, Schlüsselflächen vorgesehen sind, wobei weiter bevorzugt ist, dass der Knickbereich zwischen den Schlüsselflächen und dem Endzapfen vorgesehen ist.

Darüber hinaus beansprucht die vorliegende Erfindung unabhängig Schutz für ein Spurstangeninnengelenk für eine Fahrzeuglenkung gemäß dem unabhängigen Anspruch 13. Dieses Spurstangeninngelenk zeigt die gleichen Vorzüge, wie sie oben mit Bezug auf den erfindungsgemäßen Axialkugelzapfen beschrieben worden sind.

Eine bevorzugte Ausführungsform der Erfindung sieht vor, dass die Längsöffnung der Gelenkkugel ein Innengewinde und der Endzapfen ein Außengewinde aufweist und Gelenkkugel und Endzapfen mittels dieser Gewinde verbunden sind.

Eine bevorzugte Ausführungsform der Erfindung sieht vor, dass die Gelenkkugel und der Endzapfen durch Einpressen, Schweißen, insbesondere Widerstandsschweißen, Löten, Umspritzen, Umgießen, Sintern und/oder Kleben miteinander verbunden sind.

Weitere bevorzugte Ausführungsformen sind in den Unteransprüchen beschrieben. Besondere Ausführungsformen der Erfindung werden beispielhaft anhand der beiliegenden Figuren beschrieben. Gleiche oder funktionsgleiche Teile sind mit den gleichen Bezugszeichen bezeichnet. Es zeigen:
- Figur 1: eine erste Ausführungsform eines erfindungsgemäßen Axialkugelzapfens;
- Figur 2: eine zweite Ausführungsform eines erfindungsgemäßen Axialkugelzapfens,
- Figur 3: eine dritte Ausführungsform eines erfindungsgemäßen Axialkugelzapfens;
- Figur 4: eine vierte Ausführungsform eines erfindungsgemäßen Axialkugelzapfens;
- Figur 5: eine fünfte Ausführungsform eines erfindungsgemäßen Axialkugelzapfens; und
- Figur 6: eine sechste Ausführungsform eines erfindungsgemäßen Axialkugelzapfens;

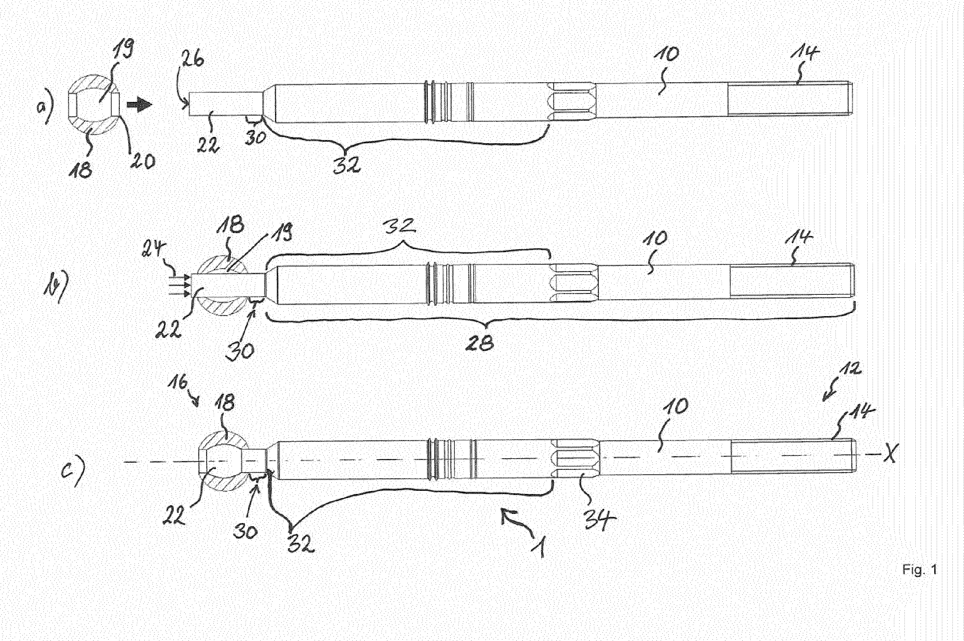

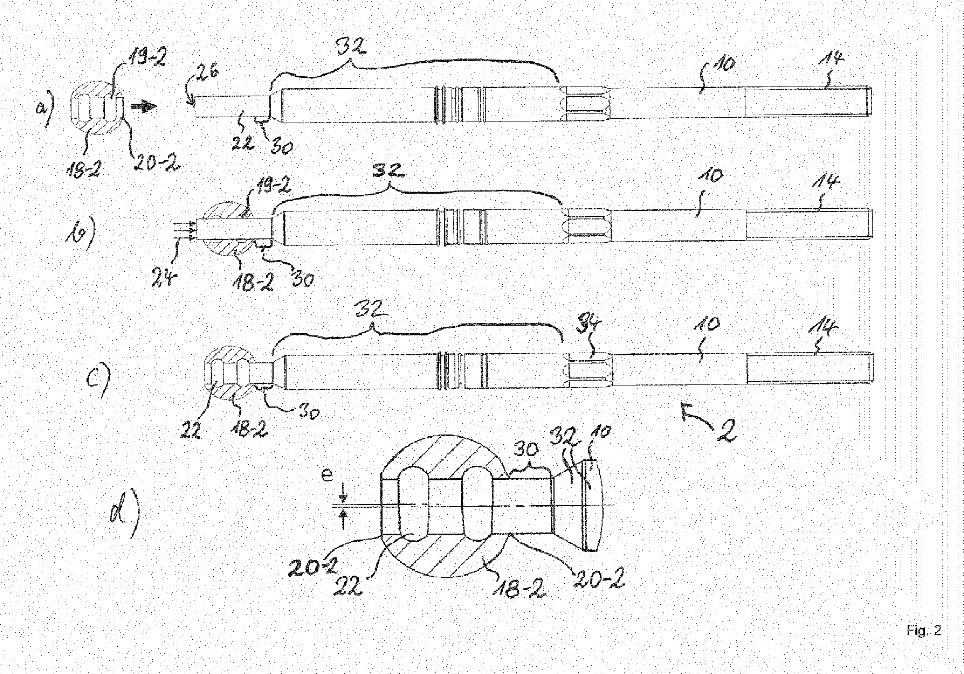

Figur 1 zeigt eine erste Ausführungsform 1 eines erfindungsgemäßen Axialkugelzapfens. Die Figur 1 zeigt in den Abschnitten a), b) und c) wesentliche Schritte zur Herstellung des fertigen, unten im Teil c) dargestellten Axialkugelzapfens 1. Sowohl der Axialkugelzapfen 1 der Figur 1 als auch alle folgenden Axialkugelzapfen der Figuren 2 bis 6 sind zur Verwendung bei Fahrzeuglenkvorrichtungen oder Fahrzeugaufhängungen vorgesehen bzw. zur Verwendung in Spurstangeninnengelenken (7, siehe unten) für eine Fahrzeuglenkung hergerichtet.

Der Axialkugelzapfen 1 der in Figur 1 dargestellten ersten Ausführungsform der Erfindung weist eine gerade Metallstange 10 auf. Die Metallstange 10 kann bevorzugt aus Stahl oder Aluminium hergestellt sein. An einem rechts dargestellten Ende 12 weist die Metallstange 10 einen Gewindeabschnitt 14 auf. An dem gegenüberliegenden, anderen links dargestellten Ende 16 der Metallstange 10 weist diese eine Gelenkkugel 18 auf. Der Axialkugelzapfen 1 der in Figur 1 dargestellten ersten Ausführungsform ist, wie auch alle im Folgenden auf die Figuren 1 bis 6 beschriebenen weiteren Ausführungsformen des erfindungsgemäßen Axialkugelzapfens, zweiteilig ausgebildet. Hierzu weist die Gelenckugel 18 des Axialkugelzapfens 1 der Figur 1 eine durch ihre Mitte hindurch verlaufende Längsöffnung 20 auf, in welche die Metallstange 10 mit einem Endzapfen 22 hineinragt. Wie aus dem oben in Figur 1 dargestellten Abschnitt a) zu erkennen ist, wird hierzu die Gelenkkugel 18 mit ihrer Längsöffnung auf den Endzapfen 22 aufgeschoben, um auf diese Weise in den in Abschnitt b) der Figur 1 dargestellten Zustand zu gelangen. Anschließend wird mit einem nicht dargestellten Stempel einen durch die drei Pfeile 24 symbolisierte Kraft auf die Vorderseite 26 des Endzapfens 22 ausgeübt, um den Endzapfen 22 auf diese Weise in den im Inneren der Gelenkkugel 18 leicht ausgewölbten Hohlraum 19 der Längsöffnung 20 hinein zu drücken, so dass dieser Hohlraum dann, wie im Abschnitt c) der Figur 1 dargestellt, vollständig von dem Endzapfen 22 ausgefüllt ist, so dass Gelenkkugel 18 und Endzapfen 22 in der Längsöffnung 20 formschlüssig miteinander verbunden sind.

Der Endzapfen 22 weist eine größere Festigkeit auf, als ein gewindeabschnittsseitig an den Endzapfen 22 angrenzender Bereich, bevorzugt als der gesamte restliche Teil 28 der Metallstange 10. Die Festigkeit des Endzapfens ist um mindestens 100 N/mm², bevorzugt um mindestens 150 N/mm² höher als die Festigkeit des übrigenden Teils 28 der Metallstange 10. Bevorzugt liegt die Festigkeit des Endzapfens im Bereich von 1000 N/mm² bis 1200 N/mm².

Bevorzugt weist der Endzapfen 22 zumindest in seinem in den Abschnitten a) und b) dargestellten Grundzustand, eine zumindest annähernd gleiche, bevorzugt eine gleiche Querschnittsfläche, gemessen senkrecht zur Längsachse, auf wie ein an den Endzapfen 22 gewindeabschnittsseitig angrenzender Gelenkhals 30.

Weiter bevorzugt weist der Endzapfen 22, zumindest in der im Abschnitt c) gestauchten finalen Form des Axialkugelzapfens 1 der ersten Ausführungsform gemäß Figur 1, zumindest innerhalb der Gelenkkugel 18 eine zumindest gleiche, jedoch weiter bevorzugt eine zumindest abschnittsweise größere Querschnittsfläche, gemessen senkrecht zur Längsachse X, auf als der an den Endzapfen 22 gewindeabschnittsseitig angrenzende Gelenkhals 30.

Die Gelenkkugel 18 und der Endzapfen 22 können, wie in Figur 1 dargestellt durch Einpressen, jedoch bei anderen Varianten auch durch Umspritzen, Umgießen, Schweißen, insbesondere Widerstandsschweißen, Löten und/oder Kleben miteinander verbunden werden. Der Endzapfen 22 und die Gelenkkugel 18 können aus unterschiedlichen Materialien bestehen und/oder unterschiedliche Festigkeiten aufweisen. Die Gelenkkugel kann bevorzugt aus einem Sintermetall, einem Thermoplast und/oder einem Duroplast bestehen und weiter bevorzugt mit einem Metall beschichtet sein.

Der zwischen Gewindeabschnitt 14 und Endzapfen 22 vorgesehene Gelenkhals 30 weist bevorzugt eine Querschnittsfläche auf, gemessen senkrecht zur Längsachse X, die geringer ist als ein gewindeabschnittsseitig an den Gelenkhals 30 angrenzender und sich bevorzugt bis zu Schlüsselflächen 34 erstreckender Knickbereich 32 der Metallstange. Die Schlüsselflächen 34 sind bevorzugt zwischen dem Knickbereich 32 und dem Gewindeabschnitt 14, weiter bevorzugt als Sechskant ausgebildet, vorgesehen.

Figur 2 zeigt eine zweite Ausführungsform 2 eines erfindungsgemäßen Axialkugelzapfens. Die Gelenkkugel 20-2 dieser zweiten Ausführungsform ist zwar ebenfalls als Durchgangsöffnung ausgebildet; der Hohlraum 19-2 weist jedoch gegenüber der ersten Ausführungsform der Figur 1 nicht nur eine Wölbung auf, sondern weist zwei von der zylindrischen Grundform der Durchgangsöffnung abweichende, als Vergrößerungen ausgebildete Querschnittsveränderungen auf. Davon abgesehen, wird auch bei der zweiten Ausführungsform gemäß Figur 2 die Gelenkkugel 18-2 über die Metallstange 10 gemäß dem in Abschnitt a) der Figur 2 dargestellten dicken Pfeil auf den Endzapfen 22 geschoben. Anschließend wird gemäß den Pfeilen 24 die Vorderseite 26 des Endzapfens 22 mit einem nicht dargestellten Stempel in den Hohlraum 19-2 der Gelenkkugel 18-2 hinein gestaucht, so dass der Hohlraum 19-2 von entsprechendem, in den Hohlraum 19-2 hinein gestauchtem Material des Endzapfens 22 vollständig ausgefüllt wird, so dass es zu einer kraftschlüssigen Verbindung zwischen Endzapfen 22 und Gelenkkugel 18-2 kommt, siehe Abschnitt c) bzw. der vergrößerten Detailansicht im Abschnitt d) der Figur 2. Eine mögliche Verdrehung der Gelenkkugel 18-2 gegen den Endzapfen 22 wird bevorzugt durch eine Exzentrizität e der Querschnittsveränderungen gegenüber der Längsachse X verhindert.

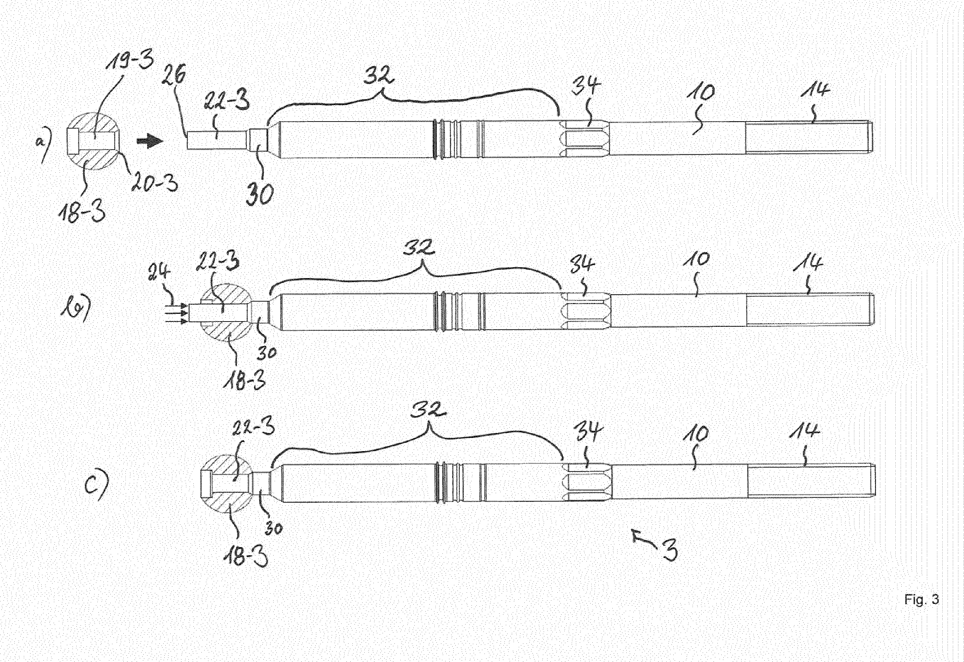

Figur 3 zeigt erneut die wesentlichen Schritte zur Herstellung eines Axialkugelzapfens, hier einer dritten Ausführungsform 3 eines Axialkugelzapfens gemäß der vorliegenden Erfindung. Im Unterschied zu den vorhergehenden Ausführungsformen ist die Gelenkkugel 18-3 der dritten Ausführungsform zwar ebenfalls mit einer Durchgangsöffnung 20-3 ausgebildet, weist jedoch in ihrem Inneren einen Hohlraum 19-3 auf, der die von der erneut im Wesentlichen zylindrischen Grundform der Durchgangsöffnung 20-3 abweichenden Querschnittsvergrößerungen am Anfang und am Ende der Durchgangsöffnung 20-3 aufweist. Darüber hinaus sind die Querschnittsvergrößerungen unterschiedlich ausgebildet. Die im Abschnitt a) gut zu erkennende, an der rechten Seite der Gelenkkugel 18-3 vorgesehene Querschnittsvergrößerung des Hohlraums 19-3 gegenüber der im Wesentlichen zylindrischen und mit dem Außendurchmesser des Endzapfens 22 korrespondierenden Grundform ausgebildete Querschnittsvergrößerung ist konusartig ausgebildet, passend zu einer entsprechenden kegelstumpfartigen Phase am Endzapfen 22-3, der sich insoweit von den Endzapfen der vorhergehenden Ausführungsformen unterscheidet, da der Endzapfen 22-3 auf diese Weise einen geringeren Außendurchmesser aufweist als der benachbart zum Endzapfen 22-3 angeordnete Gelenkhals 30 des Axialkugelzapfens 3 der dritten Ausführungsform gemäß Figur 3.

Auf der im Abschnitt a) links dargestellten Seite der Gelenkkugel 18-3 weist diese eine Querschnittsvergrößerung der im Wesentlichen zylindrischen, alternativ, jedoch nicht dargestellt, auch prismatischen, Grundform auf, die nicht konisch ist. Vielmehr dient diese Querschnittsvergrößerung, wie sich aus dem Abschnitt b) ergibt, dazu, dass während der Herstellung der Verbindung zwischen Endzapfen 22-3 und Gelenkkugel 18-3, die Vorderseite 26 des Endzapfens 22-3 erneut durch einen nicht dargestellten Stempel gemäß den Pfeilen 24 in diesen erweiterten Hohlraum hinein gedrückt werden kann, so dass die im Abschnitt c) finale, formschlüssige Verbindung zwischen Endzapfen 22-3 und Gelenkkugel 18-3 hergestellt werden kann.

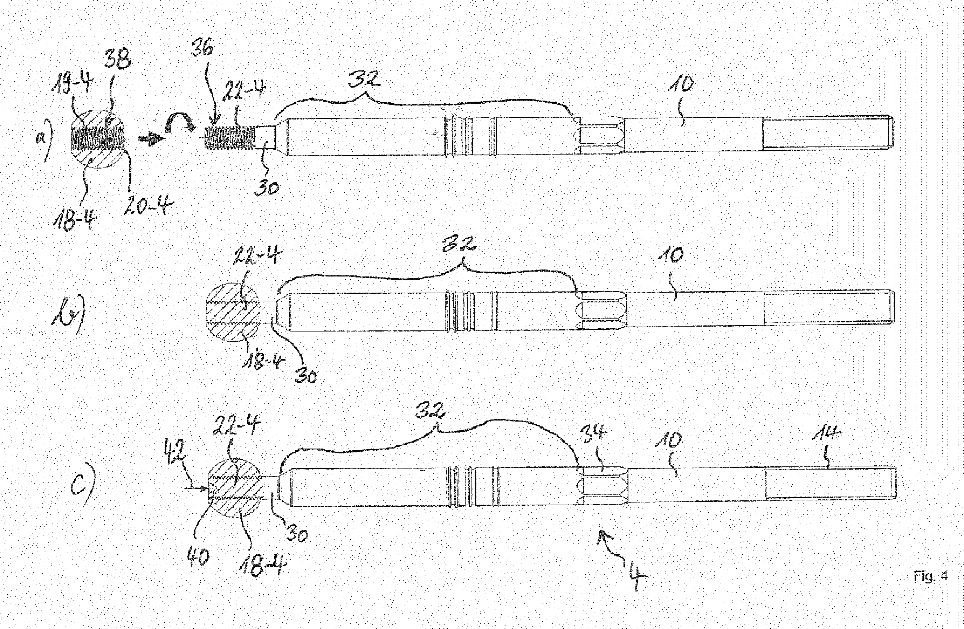

Figur 4 zeigt eine vierte Ausführungsform 4 des erfindungsgemäßen Axialkugelzapfens. Im Unterschied zu den zuvor beschriebenen Ausführungsformen weist der Axialkugelzapfen 4 einen Endzapfen 22-4 auf, der auf seinem Außenumfang ein Außengewinde 36 trägt. Der vollständig zylinderförmig ausgebildete Endzapfen 22-4 weist einem zu der Durchgangsöffnung 20-4 korrespondierenden Durchmesser auf. Zum Aufschrauben gemäß Abschnitt a) der Figur 4 der Gelenkkugel 18-4 auf den Endzapfen 22-4 weist die Gelenkkugel 18-4 in ihrem Hohlraum ein zum Außengewinde 36 des Endzapfens 22-4 passendes Innengewinde 38 auf und kann somit gemäß dem im Abschnitt a) gezeigten gebogenen Pfeil auf den Endzapfen 22-4 aufgeschraubt werden, um so in den miteinander verbundenen Zustand gemäß Abschnitt b) der Figur 4 zu gelangen. Gemäß Abschnitt c) der Figur 4 wird die Schraubverbindung noch dadurch gesichert, dass ein konusförmiges Loch 40 in den Endzapfen 22-4 gemäß Pfeil 42 mit Hilfe eines nicht dargestellten Hammers eingeschlagen wird, um die Verbindung zwischen Endzapfen 22-4 und Gelenkkugel 18-4 zu fixieren.

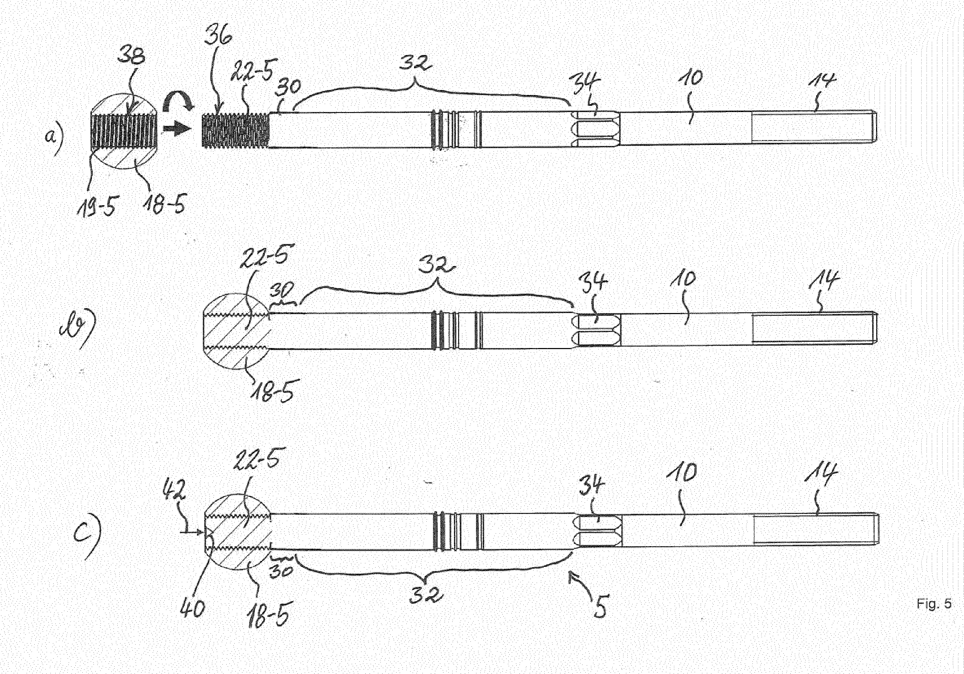

Figur 5 zeigt eine fünfte Ausführungsform 5 des erfindungsgemäßen Axialkugelzapfens. Der Axialkugelzapfen 5 der Figur 5 ist im Wesentlichen identisch zu dem Axialkugelzapfen 4 der Figur 4. Der wesentliche Unterschied zu der Ausführungsform der Figur 4 ist, dass der Endzapfen 22-5 des Axialkugelzapfens 5 der Figur 5, der gewindeabschnittsseitig unmittelbar angrenzende Gelenkhals 30, und der daran anschließende Knickbereich 32 den gleichen Durchmesser aufweisen. Dementsprechend ist auch der Hohlraum 19-5 der Gelenkkugel 18-5 des Axialkugelzapfens 5 der Figur 5 gegenüber der in Figur 4 gezeigten Ausführungsform in seinem zylindrischen Innendurchmesser korrespondierend vergrößert.

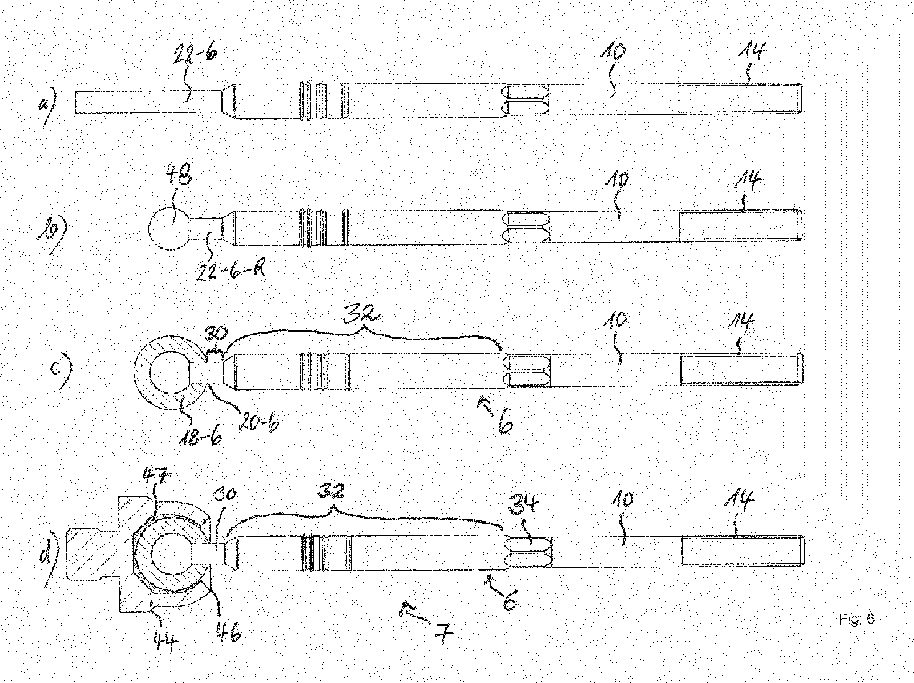

Figur 6 zeigt im Abschnitt d) die wesentlichen Elemente eines erfindungsgemäßen Spurstangeninnengelenks für eine nicht dargestellte Fahrzeuglenkung. Das dargestellte Spurstangeninnengelenk 7 weist einen Axialkugelzapfen 6 auf, der sich mit seiner Gelenkkugel 18-6 bewegbar gelagert in einem Gehäuse 44 des Spurstangeninnengelenks 7 befindet und sich in einer axialen Richtung durch eine axialkugelzapfenseitig vorgesehene Zapfenöffnung 46 hindurch aus dem Gehäuse 44 heraus erstreckt. Als Axialkugelzapfen für das in Figur 6 d) dargestellte Spurstangeninnengelenk lassen sich alle vorgenannten Ausführungsformen gemäß den Figuren 1 bis 5 der vorliegenden Erfindung verwenden. Die Ausführungsform 6 des Axialkugelzapfens gemäß Figur 6 stellt eine sechste Ausführungsform eines erfindungsgemäßen Axialkugelzapfens dar.

Im Unterschied zu den vorhergegangenen Ausführungsformen des erfindungsgemäßen Axialkugelzapfens weist die Ausführungsform 6 der Figur 6 im ersten, im Abschnitt a) dargestellten Herstellungsschritt zunächst einen zylinderförmigen Endzapfen 22-6 auf. Dieser wird in einem Zwischenschritt b) zunächst zu einer mit einem gegenüber dem Rest 22-6-R des ursprünglichen Endzapfens 22-6 vergrößerten Durchmesser aufweisenden Kugel 48 umgeformt. Im weiteren Herstellungsschritt c) wird auf die Kugel 48 dann eine beispielsweise aus entsprechend flexiblem Kunststoff gebildete Hohlkugel 18-6 aufgestülpt, die einseitig eine nur bis in ihre Mitte laufende Öffnung 20-6 aufweist. Anschließend wird um diese Gelenkkugel 18-6 herum, die gemäß Zustand c) form- und kraftschlüssig mit dem Endzapfen 48/22-6-R verbunden ist, durch Druckumformung das Gehäuse 44 des Spurstangeninnengelenks 7 unter Herstellung der Zapfenöffnung 46 gebildet und der Hohlkugel 18-6 angepasst. Innerhalb des Gehäuses 46 befinden sich Kunststofflagerschalen 47, welche die Gleiteigenschaften des Gelenks 7 verbessern.

## Patentansprüche

1. Axialkugelzapfen (1, 2, 3, 4, 5, 6) zur Verwendung bei Fahrzeuglenkvorrichtungen oder Fahrzeugaufhängungen, aufweisend eine gerade oder gekrümmte Metallstange, vorzugsweise aus Stahl oder Aluminium, einen an einem Ende der Metallstange angeordneten Gewindeabschnitt (14), eine am anderen Ende der Metallstange angeordnete Gelenkkugel (18, 18-2, 18-3, 18-4, 18-5, 18-6),
wobei zwischen Gewindeabschnitt (14) und dem Endzapfen (22, 22-2, 22-3, 22-4, 22-5, 22-6 ein Knickbereich (32) vorgesehen ist, **dadurch gekennzeichnet, dass** der Axialkugelzapfen (1, 2, 3, 4, 5, 6) zweiteilig ausgebildet ist, indem die Gelenkkugel (18, 18-2, 18-3, 18-4, 18-5, 18-6) eine zumindest bis in ihre Mitte, bevorzugt durch ihre Mitte hindurch, verlaufende Längsöffnung (20, 20-2, 20-3, 20-4, 20-5, 20-6) aufweist, in welche die Metallstange mit einem Endzapfen (22, 22-2, 22-3, 22-4, 22-5, 22-6) hineinragt, wobei Gelenkkugel (18, 18-2, 18-3, 18-4, 18-5, 18-6) und Endzapfen (22, 22-2, 22-3, 22-4, 22-5, 22-6) in dieser Längsöffnung (20, 20-2, 20-3, 20-4, 20-5, 20-6) formschlüssig und/oder kraftschlüssig miteinander verbunden sind, wobei der Endzapfen (22, 22-2, 22-3, 22-4, 22-5, 22-6) eine um mindestens 100 N/mm² größere Festigkeit aufweist als ein gewindeabschnittsseitig an den Endzapfen (22, 22-2, 22-3, 22-4, 22-5, 22-6) angrenzender Bereich (28) der Metallstange.

2. Axialkugelzapfen (1, 2, 3, 4, 5, 6) nach Anspruch 1,
wobei der Endzapfen (22, 22-2, 22-3, 22-4, 22-5, 22-6) eine um mindestens 150 N/mm² größere Festigkeit aufweist als ein gewindeabschnittsseitig an den Endzapfen (22, 22-2, 22-3, 22-4, 22-5, 22-6) angrenzender Bereich (28) der Metallstange.

3. Axialkugelzapfen (1, 2, 3, 4, 5, 6) nach einem der vorstehenden Ansprüche,
wobei der Endzapfen (22, 22-2, 22-3, 22-4, 22-5, 22-6) eine Festigkeit im Bereich von 1000 bis 1200 N/mm² aufweist.

4. Axialkugelzapfen (1, 2, 3, 4, 5, 6) nach einem der vorstehenden Ansprüche,
wobei der Endzapfen (22, 22-2, 22-3, 22-4, 22-5, 22-6) eine zumindest annähernd gleiche, bevorzugt eine gleiche Querschnittsfläche, gemessen senkrecht zur Längsachse, aufweist wie ein an den Endzapfen (22, 22-2, 22-3, 22-4, 22-5, 22-6) gewindeabschnittsseitig angrenzender Gelenkhals (30), und weiter bevorzugt auch wie der, bevorzugt an den Gelenkhals (30) gewindeabschnittsseitig angrenzende, Knickbereich (32).

5. Axialkugelzapfen (1, 2, 3, 4, 5, 6) nach einem der vorstehenden Ansprüche, wobei die Längsöffnung (20, 20-2, 20-3, 20-4, 20-5, 20-6) der Gelenkkugel (18, 18-2, 18-3, 18-4, 18-5, 18-6) als Durchgangsöffnung ausgebildet ist.

6. Axialkugelzapfen (1, 2, 3, 4, 5, 6) nach einem der vorstehenden Ansprüche,
wobei die Längsöffnung (20, 20-2, 20-3, 20-4, 20-5, 20-6) der Gelenkkugel (18, 18-2, 18-3, 18-4, 18-5, 18-6) und der Endzapfen (22, 22-2, 22-3, 22-4, 22-5, 22-6) zylinderförmig mit korrespondierendem Durchmesser ausgebildet sind.

7. Axialkugelzapfen (1, 2, 3, 4, 5, 6) nach Anspruch 6,
wobei die Längsöffnung (20, 20-2, 20-3, 20-4, 20-5, 20-6) der Gelenkkugel (18, 18-2, 18-3, 18-4, 18-5, 18-6) ein Innengewinde (38) und der Endzapfen (22, 22-2, 22-3, 22-4, 22-5, 22-6) ein Außengewinde (36) aufweist und Gelenkkugel (18, 18-2, 18-3, 18-4, 18-5, 18-6) und Endzapfen (22, 22-2, 22-3, 22-4, 22-5, 22-6) mittels dieser Gewinde verbunden sind.

8. Axialkugelzapfen (1, 2, 3, 4, 5, 6) nach einem der Ansprüche 1 bis 6,
wobei die Längsöffnung (20, 20-2, 20-3, 20-4, 20-5, 20-6) der Gelenkkugel (18, 18-2, 18-3, 18-4, 18-5, 18-6) über ihre Längsachse (X) verteilt von der prismatischen und/oder zylindrischen Grundform abweichende Querschnittsveränderungen, insbesondere Vergrößerungen aufweist, in die korrespondierende Querschnittsveränderungen des Endzapfens (22, 22-2, 22-3, 22-4, 22-5, 22-6) formschlüssig eingreifen.

9. Axialkugelzapfen (1, 2, 3, 4, 5, 6) nach einem der vorstehenden Ansprüche,
wobei die Gelenkkugel (18, 18-2, 18-3, 18-4, 18-5, 18-6) und der Endzapfen (22, 22-2, 22-3, 22-4, 22-5, 22-6) durch Einpressen, Umspritzen, Umgießen, Schweißen, insbesondere Widerstandsschweißen, Löten und/oder Kleben miteinander verbunden sind.

10. Axialkugelzapfen (1, 2, 3, 4, 5, 6) nach einem der vorstehenden Ansprüche,
wobei Endzapfen (22, 22-2, 22-3, 22-4, 22-5, 22-6) und Gelenkkugel (18, 18-2, 18-3, 18-4, 18-5, 18-6) aus unterschiedlichen Materialien bestehen und/oder unterschiedliche Festigkeiten aufweisen.

11. Axialkugelzapfen (1, 2, 3, 4, 5, 6) nach einem der vorstehenden Ansprüche,
wobei eine Querschnittsfläche des Knickbereichs (32), gemessen senkrecht zur Längsachse (X), zumindest abschnittsweise geringer ist als ein gewindeabschnittsseitig an den Knickbereich (32) angrenzender Teil der Metallstange.

12. Axialkugelzapfen (1, 2, 3, 4, 5, 6) nach einem der vorstehenden Ansprüche,
wobei zwischen dem Knickbereich (32) und dem Gewindeabschnitt (14), vorzugsweise als Sechskant ausgebildete, Schlüsselflächen (34) vorgesehen sind, wobei weiter bevorzugt ist, dass der Knickbereich (32) zwischen den Schlüsselflächen (34) und dem Endzapfen (22, 22-2, 22-3, 22-4, 22-5, 22-6) vorgesehen ist.

13. Spurstangeninnengelenk (7) für eine Fahrzeuglenkung, mit einem eine Zapfenöffnung (46) aufweisenden Gehäuse (44), einem eine Gelenkkugel (18, 18-2, 18-3, 18-4, 18-5, 18-6) und eine Metallstange aufweisenden Axialkugelzapfen (1, 2, 3, 4, 5, 6) nach einem der vorstehenden Ansprüche, der mit seiner Gelenkkugel (18, 18-2, 18-3, 18-4, 18-5, 18-6) bewegbar in dem Gehäuse (44) gelagert ist und sich in einer axialen Richtung (X) durch die Zapfenöffnung (46) hindurch aus diesem heraus erstreckt;
**dadurch gekennzeichnet, dass** die Gelenkkugel (18, 18-2, 18-3, 18-4, 18-5, 18-6) des Axialkugelzapfens (1, 2, 3, 4, 5, 6) eine zumindest bis in ihre Mitte, bevorzugt durch ihre Mitte hindurch, verlaufende Längsöffnung (20, 20-2, 20-3, 20-4, 20-5, 20-6) aufweist, in welche die Metallstange mit einem Endzapfen (22, 22-2, 22-3, 22-4, 22-5, 22-6) hineinragt, welcher eine um mindestens 100 N/mm² größere Festigkeit aufweist als ein an den Endzapfen (22, 22-2, 22-3, 22-4, 22-5, 22-6) angrenzender Bereich (28) der Metallstange, wobei Gelenkkugel (18, 18-2, 18-3, 18-4, 18-5, 18-6) und Endzapfen (22, 22-2, 22-3, 22-4, 22-5, 22-6) in dieser Längsöffnung (20, 20-2, 20-3, 20-4, 20-5, 20-6) formschlüssig und/oder kraftschlüssig miteinander verbunden sind.

14. Spurstangeninnengelenk (7) nach Anspruch 13,
wobei die Längsöffnung (20, 20-2, 20-3, 20-4, 20-5, 20-6) der Gelenkkugel (18, 18-2, 18-3, 18-4, 18-5, 18-6) ein Innengewinde (38) und der Endzapfen (22, 22-2, 22-3, 22-4, 22-5, 22-6) ein Außengewinde (36) aufweist und Gelenkkugel (18, 18-2, 18-3, 18-4, 18-5, 18-6) und Endzapfen (22, 22-2, 22-3, 22-4, 22-5, 22-6) mittels dieser Gewinde verbunden sind.

15. Spurstangeninnengelenk (7) nach einem der Ansprüche 13 oder 14,
wobei die Gelenkkugel (18, 18-2, 18-3, 18-4, 18-5, 18-6) und der Endzapfen (22, 22-2, 22-3, 22-4, 22-5, 22-6) durch Einpressen, Schweißen, insbesondere Widerstandsschweißen, Löten, Umspritzen, Umgießen, Sintern und/oder Kleben miteinander verbunden sind.

## Claims

1. Axial ball stud (1, 2, 3, 4, 5, 6) for use in vehicle steering devices or vehicle suspensions, having a straight or curved metal rod, preferably made of steel or aluminium, a threaded section (14) arranged at one end of the metal rod, and a joint ball (18, 18-2, 18-3, 18-4, 18-5, 18-6) arranged at the other end of the metal rod, wherein a kink region (32) is provided between the threaded section (14) and the end pin (22, 22-2, 22-3, 22-4, 22-5, 22-6), **characterised in that** the axial ball pin (1, 2, 3, 4, 5, 6) is designed in two parts, **in that** the joint ball (18, 18-2, 18-3, 18-4, 18-5, 18-6) has a longitudinal opening (20, 20-2, 20-3, 20-4, 20-5, 20-6) running at least to its centre, preferably through its centre, into which the metal rod with an end pin (22, 22-2, 22-3, 22-4, 22-5, 22-6) protrudes, wherein the joint ball (18, 18-2, 18-3, 18-4, 18-5, 18-6) and end pin (22, 22-2, 22-3, 22-4, 22-5, 22-6) are positively and/or non-positively connected to one another in this longitudinal opening (20, 20-2, 20-3, 20-4, 20-5, 20-6), wherein the end pin (22, 22-2, 22-3, 22-4, 22-5, 22-6) has a strength that is at least 100 N/mm² greater than an area (28) of the metal rod that adjoins the end pin (22, 22-2, 22-3, 22-4, 22-5, 22-6) on the threaded section side.

2. Axial ball stud (1, 2, 3, 4, 5, 6) according to claim 1, wherein the end pin (22, 22-2, 22-3, 22-4, 22-5, 22-6), has a strength that is at least 150 N/mm² greater than an area (28) of the metal rod that adjoins the end pin (22, 22-2, 22-3, 22-4, 22-5, 22-6) on the threaded section side.

3. Axial ball stud (1, 2, 3, 4, 5, 6) according to either of the preceding claims, wherein the end pin (22, 22-2, 22-3, 22-4, 22-5, 22-6) has a strength in the range of 1,000 to 1,200 N/mm².

4. Axial ball stud (1, 2, 3, 4, 5, 6) according to any one of the preceding claims, wherein the end pin (22, 22-2, 22-3, 22-4, 22-5, 22-6) has an at least approximately the same, preferably exactly the same cross-sectional area, measured perpendicular to the longitudinal axis, as a joint neck (30) adjoining the end pin (22, 22-2, 22-3, 22-4, 22-5, 22-6) on the threaded section side, and more preferably also as the kink region (32) preferably adjoining the joint neck (30) on the threaded section side.

5. Axial ball stud (1, 2, 3, 4, 5, 6) according to any one of the preceding claims, wherein the longitudinal opening (20, 20-2, 20-3, 20-4, 20-5, 20-6) of the joint ball (18, 18-2, 18-3, 18-4, 18-5, 18-6) is designed as a through opening.

6. Axial ball stud (1, 2, 3, 4, 5, 6) according to any one of the preceding claims, wherein the longitudinal opening (20, 20-2, 20-3, 20-4, 20-5, 20-6) of the joint ball (18, 18-2, 18-3, 18-4, 18-5, 18-6) and the end pin (22, 22-2, 22-3, 22-4, 22-5, 22-6) are cylindrical with a corresponding diameter.

7. Axial ball stud (1, 2, 3, 4, 5, 6) according to claim 6, wherein the longitudinal opening (20, 20-2, 20-3, 20-4, 20-5, 20-6) of the joint ball (18, 18-2, 18-3, 18-4, 18-5, 18-6) has an internal thread (38) and the end pin (22, 22-2, 22-3, 22-4, 22-5, 22-6) has an external thread (36) and joint ball (18, 18-2, 18-3 , 18-4, 18-5, 18-6) and end pin (22, 22-2, 22-3, 22-4, 22-5, 22-6) are connected by means of these threads.

8. Axial ball stud (1, 2, 3, 4, 5, 6) according to any one of claims 1 to 6, wherein the longitudinal opening (20, 20-2, 20-3, 20-4, 20-5, 20-6) of the joint ball (18, 18-2, 18-3, 18-4, 18-5, 18-6) has cross-sectional changes distributed over its longitudinal axis (X) that differ from the prismatic and/or cylindrical basic shape, in particular enlargements, into which corresponding cross-sectional changes of the end pin (22, 22-2, 22-3, 22-4, 22-5, 22- 6) engage positively.

9. Axial ball stud (1, 2, 3, 4, 5, 6) according to any one of the preceding claims, wherein the joint ball (18, 18-2, 18-3, 18-4, 18-5, 18-6) and the end pin (22, 22-2, 22-3, 22-4, 22-5, 22-6) are connected to one another by pressing in, over-moulding, casting around, welding, in particular resistance welding, soldering and/or gluing.

10. Axial ball stud (1, 2, 3, 4, 5, 6) according to any one of the preceding claims, wherein end pin (22, 22-2, 22-3, 22-4, 22-5, 22-6) and joint ball (18, 18-2, 18-3, 18-4, 18-5, 18-6) consist of different materials and/or have different strengths.

11. Axial ball stud (1, 2, 3, 4, 5, 6) according to any one of the preceding claims, wherein a cross-sectional area of the kink region (32), measured perpendicular to the longitudinal axis (X), is at least partially smaller than a part of the metal rod adjoining the kink region (32) on the threaded section side.

12. Axial ball stud (1, 2, 3, 4, 5, 6) according to any one of the preceding claims, wherein wrench flats (34), preferably formed as a hexagon, are provided between the kink region (32) and the threaded section (14), wherein it is further preferred that the kink region (32) is provided between the wrench flats (34) and the end pin (22, 22 -2, 22-3, 22-4, 22-5, 22-6).

13. Track rod inner joint (7) for a vehicle steering system, with a housing (44) having a stud opening (46), a joint ball (18, 18-2, 18-3, 18-4, 18-5, 18-6) and an axial ball stud (1, 2, 3, 4, 5, 6) having a metal rod, according to any one of the preceding claims, which with its joint ball (18, 18-2, 18 -3, 18-4, 18-5, 18-6) is movably mounted in the housing (44) and extends in an axial direction (X) through the stud opening (46) out of this;
**characterised in that** the joint ball (18, 18-2, 18-3, 18-4, 18-5, 18-6) of the axial ball pin (1, 2, 3, 4, 5, 6) has a longitudinal opening (20, 20-2, 20-3, 20-4, 20-5, 20-6) extending at least to its centre, preferably through its centre, into which the metal rod with an end pin (22, 22-2, 22-3, 22- 4, 22-5, 22-6) protrudes, which preferably has a strength that is at least 100 N/mm² greater than an area (28) of the metal rod that adjoins the end pin (22, 22-2, 22-3, 22-4, 22-5, 22-6) on the threaded section side, wherein the joint ball (18, 18-2, 18- 3, 18-4, 18-5, 18-6) and end pins (22, 22-2, 22-3, 22-4, 22-5, 22-6) are positively and/or non-positively connected to one another in this longitudinal opening (20, 20-2, 20 -3, 20-4, 20-5, 20-6).

14. Track rod inner joint (7) according to claim 13, wherein the longitudinal opening (20, 20-2, 20-3, 20-4, 20-5, 20-6) of the joint ball (18, 18-2, 18-3, 18-4, 18-5, 18-6) has an internal thread (38) and the end pin (22, 22-2, 22-3, 22-4, 22-5, 22-6) has an external thread (36) and joint ball (18, 18-2, 18-3 , 18-4, 18-5, 18-6) and end pins (22, 22-2, 22-3, 22-4, 22-5, 22-6) are connected by means of these threads.

15. Track rod inner joint (7) according to either of claims 13 or 14, wherein the joint ball (18, 18-2, 18-3, 18-4, 18-5, 18-6) and the end pin (22, 22-2, 22-3, 22-4, 22-5, 22- 6) are connected to one another by pressing in, welding, in particular resistance welding, soldering, over-moulding, casting around, sintering and/or gluing.

## Revendications

1. Pivot à rotule axial (1, 2, 3, 4, 5, 6) destiné à être utilisé pour des dispositifs de direction de véhicule ou des suspensions de véhicule, présentant une tige métallique droite ou incurvée, de préférence en acier ou en aluminium, une section de filetage (14) agencée à une extrémité de la tige métallique, une rotule d'articulation (18, 18-2, 18-3, 18-4, 18-5, 18-6) agencée à l'autre extrémité de la tige métallique,
dans lequel une zone de flambage (32) est prévue entre la section de filetage (14) et le pivot d'extrémité (22, 22-2, 22-3, 22-4, 22-5, 22-6), **caractérisé en ce que**
le pivot à rotule axial (1, 2, 3, 4, 5, 6) est réalisé en deux parties **en ce que** la rotule d'articulation (18, 18-2, 18-3, 18-4, 18-5, 18-6) présente une ouverture longitudinale (20, 20-2, 20-3, 20-4, 20-5, 20-6) s'étendant au moins jusqu'à son milieu, de préférence à travers son milieu, dans laquelle la tige métallique pénètre avec un pivot d'extrémité (22, 22-2, 22-3, 22-4, 22-5, 22-6), dans lequel la rotule d'articulation (18, 18-2, 18-3, 18-4, 18-5, 18-6) et la rotule d'extrémité (22, 22-2, 22-3, 22-4, 22-5, 22-6) sont reliées entre elles à complémentarité de formes et/ou à force dans cette ouverture longitudinale (20, 20-2, 20-3, 20-4, 20-5, 20-6), dans lequel le pivot d'extrémité (22, 22-2, 22-3, 22-4, 22-5, 22-6) présente une résistance supérieure d'au moins 100 N/mm² à celle d'une zone (28) contiguë côté section de filetage au pivot d'extrémité (22, 22-2, 22-3, 22-4, 22-5, 22-6) de la tige métallique.

2. Pivot à rotule axial (1, 2, 3, 4, 5, 6) selon la revendication 1,
dans lequel le pivot d'extrémité (22, 22-2, 22-3, 22-4, 22-5, 22-6) présente une résistance supérieure d'au moins 150 N/mm² à celle d'une zone (28) contiguë côté section de filetage au pivot d'extrémité (22, 22-2, 22-3, 22-4, 22-5, 22-6) de la tige métallique.

3. Pivot à rotule axial (1, 2, 3, 4, 5, 6) selon l'une des revendications précédentes,
dans lequel le pivot d'extrémité (22, 22-2, 22-3, 22-4, 22-5, 22-6) présente une résistance dans la plage de 1 000 à 1 200 N/mm².

4. Pivot à rotule axial (1, 2, 3, 4, 5, 6) selon l'une des revendications précédentes,
dans lequel le pivot d'extrémité (22, 22-2, 22-3, 22-4, 22-5, 22-6) présente une aire de section transversale au moins approximativement identique, de préférence identique, mesurée perpendiculairement à l'axe longitudinal, à un cou d'articulation (30) contigüe au pivot d'extrémité (22, 22-2, 22-3, 22-4, 22-5, 22-6) côté section de filetage, et de manière davantage préférée aussi à la zone de flambage (32) contiguë de préférence au cou d'articulation (30) côté section de filetage.

5. Pivot à rotule axial (1, 2 3, 4, 5, 6) selon l'une des revendications précédentes,
dans lequel l'ouverture longitudinale (20, 20-2, 20-3, 20-4, 20-5, 20-6) de la rotule d'articulation (18, 18-2, 18-3, 18-4, 18-5, 18-6) est réalisée comme ouverture traversante.

6. Pivot à rotule axial (1, 2, 3, 4, 5, 6) selon l'une des revendications précédentes,
dans lequel l'ouverture longitudinale (20, 20-2, 20-3, 20-4, 20-5, 20-6) de la rotule d'articulation (18, 18-2, 18-3, 18-4, 18-5, 18-6) et le pivot d'extrémité (22, 22-2, 22-3, 22-4, 22-5, 22-6) sont réalisés en forme de cylindre avec un diamètre correspondant.

7. Pivot à rotule axial (1, 2, 3, 4, 5, 6) selon la revendication 6,
dans lequel l'ouverture longitudinale (20, 20-2, 20-3, 20-4, 20-5, 20-6) de la rotule d'articulation (18, 18-2, 18-3, 18-4, 18-5, 18-6) présente un filetage intérieur (38) et le pivot d'extrémité (22, 22-2, 22-3, 22-4, 22-5, 22-6) présente un filetage extérieur (36) et la rotule d'articulation (18, 18-2, 18-3, 18-4, 18-5, 18-6) et le pivot d'extrémité (22, 22-2, 22-3, 22-4, 22-5, 22-6) sont reliés au moyen de ce filetage.

8. Pivot à rotule axial (1, 2, 3, 4, 5, 6) selon l'une des revendications 1 à 6,
dans lequel l'ouverture longitudinale (20, 20-2, 20-3, 20-4, 20-5, 20-6) de la rotule d'articulation (18, 18-2, 18-3, 18-4, 18-5, 18-6) présente de manière répartie sur son axe longitudinal (X) des modifications de section transversale divergeant de la forme de base prismatique et/ou cylindrique, en particulier des agrandissements dans lesquels des modifications de section transversale correspondantes du pivot d'extrémité (22, 22-2, 22-3, 22-4, 22-5, 22-6) viennent en prise à complémentarité de formes.

9. Pivot à rotule axial (1, 2, 3, 4, 5, 6) selon l'une des revendications précédentes,
dans lequel les rotules d'articulation (18, 18-2, 18-3, 18-4, 18-5, 18-6) et le pivot d'extrémité (22, 22-2, 22-3, 22-4, 22-5, 22-6) sont reliés entre eux par enfoncement, surmoulage, coulage, soudage, en particulier soudage par résistance, brasage et/ou collage.

10. Pivot à rotule axial (1, 2, 3, 4, 5, 6) selon l'une des revendications précédentes,
dans lequel des pivots d'extrémité (22, 22-2, 22-3, 22-4, 22-5, 22-6) et des pivots d'articulation (18, 18-2, 18-3, 18-4, 18-5, 18-6) se composent de matériaux différents et/ou présentent des résistances différentes.

11. Pivot à rotule axial (1, 2, 3, 4, 5, 6) selon l'une des revendications précédentes,
dans lequel une aire de section transversale de la zone de flambage (32), mesurée perpendiculairement à l'axe longitudinal (X), est inférieure au moins par sections à celle d'une partie contiguë côté section de filetage à la zone de flambage (32) de la tige métallique.

12. Pivot à rotule axial (1, 2, 3, 4, 5, 6) selon l'une des revendications précédentes,
dans lequel des surfaces de clé (34) réalisées de préférence comme hexagone sont prévues entre la zone de flambage (32) et la section de filetage (14), dans lequel il est davantage préféré que la zone de flambage (32) soit prévue entre les surfaces de clé (34) et le pivot d'extrémité (22, 22-2, 22-3, 22-4, 22-5, 22-6).

13. Articulation intérieure de barre d'accouplement (7) pour une direction de véhicule, avec un boîtier (44) présentant une ouverture de pivot (46), un pivot à rotule axial (1, 2, 3, 4, 5, 6) présentant une rotule d'articulation (18, 18-2, 18-3, 18-4, 18-5, 18-6) et une tige métallique selon l'une des revendications précédentes, qui est logé de manière mobile avec sa rotule d'articulation (18, 18-2, 18-3, 18-4, 18-5, 18-6) dans le boîtier (44) et s'étend dans un sens axial (X) à travers l'ouverture de pivot (46) hors de celui-ci ;
**caractérisée en ce que** la rotule d'articulation (18, 18-2, 18-3, 18-4, 18-5, 18-6) du pivot à rotule axial (1, 2, 3, 4, 5, 6) présente une ouverture longitudinale (20, 20-2, 20-3, 20-4, 20-5, 20-6) s'étendant au moins jusqu'à son milieu, de préférence à travers son milieu, dans laquelle la tige métallique pénètre avec un pivot d'extrémité (22, 22-2, 22-3, 22-4, 22-5, 22-6) qui présente une résistance supérieure d'au moins 100 N/mm² à celle d'une zone (28) contiguë au pivot d'extrémité (22, 22-2, 22-3, 22-4, 22-5, 22-6) de la tige métallique, dans laquelle la rotule d'articulation (18, 18-2, 18-3, 18-4, 18-5, 18-6) et la rotule d'extrémité (22, 22-2, 22-3, 22-4, 22-5, 22-6) sont reliées entre elles dans cette ouverture longitudinale (20, 20-2, 20-3, 20-4, 20-5, 20-6) à complémentarité de formes et/ou à force.

14. Articulation intérieure de barre d'accouplement (7) selon la revendication 13,
dans laquelle l'ouverture longitudinale (20, 20-2, 20-3, 20-4, 20-5, 20-6) de la rotule d'articulation (18, 18-2, 18-3, 18-4, 18-5, 18-6) présente un filetage intérieur (38) et le pivot d'extrémité (22, 22-2, 22-3, 22-4, 22-5, 22-6) présente un filetage extérieur (36) et la rotule d'articulation (18, 18-2, 18-3, 18-4, 18-5, 18-6) et le pivot d'extrémité (22, 22-2, 22-3, 22-4, 22-5, 22-6) sont reliés au moyen de ce filetage.

15. Articulation intérieure de barre d'accouplement (7) selon l'une des revendications 13 ou 14,
dans laquelle la rotule d'articulation (18, 18-2, 18-3, 18-4, 18-5, 18-6) et le pivot d'extrémité (22, 22-2, 22-3, 22-4, 22-5, 22-6) sont reliés entre eux par enfoncement, soudage, en particulier soudage par résistance, brasage, surmoulage, coulage, frittage et/ou collage.
